**Europäisches Patentamt**

**European Patent Office**

**Office européen des brevets**

(19)

(11) Numéro de publication : **0 494 299 B1**

(12)

# FASCICULE DE BREVET EUROPEEN

(45) Date de publication du fascicule du brevet :
**15.06.94 Bulletin 94/24**

(51) Int. Cl.$^5$ : **F16L 11/08,** F16L 11/16

(21) Numéro de dépôt : **91914423.8**

(22) Date de dépôt : **29.07.91**

(86) Numéro de dépôt international :
**PCT/FR91/00626**

(87) Numéro de publication internationale :
**WO 92/02751 20.02.92 Gazette 92/05**

(54) **CARCASSE ET CONDUITE TUBULAIRE FLEXIBLE COMPORTANT UNE TELLE CARCASSE.**

(30) Priorité : **27.07.90 FR 9009656**

(43) Date de publication de la demande :
**15.07.92 Bulletin 92/29**

(45) Mention de la délivrance du brevet :
**15.06.94 Bulletin 94/24**

(84) Etats contractants désignés :
**BE DE DK ES FR GB GR IT NL SE**

(56) Documents cités :
**EP-A- 0 286 462
EP-A- 0 308 531
FR-A- 2 548 756
FR-A- 2 568 977
US-A- 1 954 724
US-A- 3 687 169
US-A- 3 771 570**

(73) Titulaire : **COFLEXIP**
**88, avenue du Général-Leclerc**
**F-92100 Boulogne-Billancourt (FR)**
Titulaire : **INSTITUT FRANCAIS DU PETROLE**
**4, Avenue de Bois Préau**
**F-92502 Rueil-Malmaison (FR)**

(72) Inventeur : **MALLEN HERRERO, José**
**29, boulevard des Batignolles**
**F-75008 Paris (FR)**
Inventeur : **LE BAIL, Guy**
**29, rue Sacha-Guitry**
**F-76480 Yainville (FR)**
Inventeur : **FERET, Jany**
**57, rue de Grasse Village**
**F-78810 Feucherolles (FR)**

(74) Mandataire : **Leszczynski, André**
**CABINET NONY & CIE.**
**29 rue Cambacérès**
**F-75008 Paris (FR)**

## Description

La présente invention se rapporte principalement à une carcasse tubulaire métallique comportant des caissons et une conduite tubulaire flexible comportant au moins une telle carcasse.

Coflexip, une des Sociétés Déposantes, fabrique et commercialise depuis de nombreuses années des conduites tubulaires flexibles de grandes longueurs, à résistance mécanique élevée, utilisables notamment pour le transport d'hydrocarbures, en particulier dans un cadre d'installation de production pétrolière sous-marine.

Des réalisations courantes de conduites de type "rough bore" comportent une bande métallique profilée à double agrafage constituant une carcasse interne résistant à l'écrasement, une gaine étanche interne, une armure destinée à donner à la conduite tubulaire flexible une résistance importante à la pression interne et à la traction axiale et une gaine extérieure de protection. Ces conduites tubulaires flexibles peuvent être en outre complétées par une ou plusieurs gaines intermédiaires.

Il est connu d'autre part des conduites tubulaires flexibles appelées "smooth bore" dont la paroi interne est constituée par un tube intérieur étanche.

Un exemple particulièrement performant de bande métallique profilée à double agrafage de type connu est notamment décrit dans la demande de brevet français n° 89/15272 déposé le 21 Novembre 1989 par Coflexip, une des Sociétés Déposantes, publié sous le N° 2 654 795.

On effectue une déformation plastique d'un ruban métallique plat tel qu'un feuillard en acier inoxydable, pour lui donner la forme d'une bande profilée à double agrafage. Pour former la carcasse, on effectue le spiralage de la bande profilée, c'est-à-dire son enroulement hélicoïdal à faible pas avec emboîtement de bandes métalliques profilées. Après emboîtement de deux spires successives, on effectue une dernière déformation plastique de la bande nécessaire pour compléter l'agrafage.

La présente invention se rapporte à une carcasse tubulaire flexible conforme à la revendication 1. On entend par caisson un volume clos allongé de section sensiblement constante enroulé en spires hélicoïdales autour de l'axe de la carcasse.

La section du caisson est fermée, la section du caisson étant alors continue.

Dans un mode particulier de réalisation, la section du caisson est fermée par rapprochement sensiblement jointif de deux éléments constituant la paroi du caisson. En variante, la section peut être intégralement fermée, la section du caisson étant alors continue.

La carcasse selon la présente invention comporte au moins une bande profilée métallique enroulée en spires hélicoïdales avec un faible pas autour de l'axe de la conduite flexible formée par la carcasse, les deux parties latérales de la bande profilée constituant des portées radiales qui assurent l'agrafage axial de la bande profilée, l'une au moins de ces deux portées radiales présentant la forme d'un caisson, et la bande profilée comprenant en outre au moins une partie médiane droite formant portée d'appui radial et correspondant à une partie cylindrique de la carcasse.

Le caisson de la carcasse selon la présente invention comporte, dans des plans sensiblement perpendiculaires à l'axe longitudinal de la conduite flexible, une première face radiale disposée du côté de la partie centrale de la bande profilée, et une seconde face radiale qui constitue l'un des deux bords latéraux de la bande profilée. Le caisson comporte, complémentairement, deux faces approximativement cylindriques, l'une interne et l'autre externe, disposées de telle sorte qu'elles permettent au caisson de participer efficacement à la résistance de la conduite flexible aux efforts radiaux, en particulier aux efforts d'écrasement.

L'agrafage axial réalisé par les portées radiales de la bande profilée permet de limiter, de façon déterminée et précise, l'amplitude des déplacements qui peuvent affecter, dans le sens axial de la conduite flexible, les spires formées par la bande profilée. La bande profilée présente ainsi la forme d'une hélice dont le pas peut varier entre des limites fixées de pas minimum et pas maximum.

Par contre, contrairement aux bandes profilées à double agrafage de type connu, la carcasse selon la présente invention ne présente pas d'agrafage dans le sens radial. Il a été trouvé que le maintien de la bande profilée dans sa configuration générale, sans désorganisation de la structure, est assuré de façon satisfaisante, en particulier grâce à l'emboîtement de chaque caisson dans les éléments complémentaires de la bande profilée.

Dans une variante de réalisation, la carcasse selon la présente invention comporte une première nappe constituée par au moins une bande profilée selon la présente invention, avec au moins un caisson dont les deux bords longitudinaux formant portée d'agrafage axial sont orientés radialement dans le même sens par rapport à l'axe de la conduite tubulaire flexible. La carcasse comporte alors en outre une seconde nappe constituée par au moins une bande profilée complémentaire permettant, en particulier, d'assurer l'agrafage axial de la carcasse. La dite bande profilée complémentaire peut être ou bien une bande profilée selon la présente invention, comportant au moins un caisson, ou bien toute autre bande profilée dont les deux parties latérales constituent des portées radiales d'agrafage axial, la dite bande pouvant présenter en section, par exemple, une forme en U.

Dans une autre variante de réalisation, la carcasse selon la présente invention comporte une seule nappe qui est constituée par au moins une bande profilée dont les deux parties latérales formant portée d'agrafage axial sont orientées radialement, en sens opposés par rapport à l'axe de la conduite tubulaire flexible, de sorte que ladite bande profilée présente une configuration générale en forme de S.

Dans une vue en section droite, la bande profilée (en S) présente ainsi un segment central radial, de préférence perpendiculaire à l'axe longitudinal de la carcasse, réunissant deux parties médianes qui correspondent respectivement à une portée cylindrique interne et à une portée cylindrique externe d'appui radial.

Dans le cas de cette variante, la nappe unique constituant la carcasse selon la présente invention peut, en particulier, être réalisée par l'enroulement hélicoïdal d'une seule bande profilée en S présentant au moins un caisson. Chacune des deux portées radiales d'agrafage axial d'une spire est, ainsi agrafée avec les portées radiales correspondantes de chacune des deux spires adjacentes. En variante, la nappe peut comporter deux bandes profilées en S, présentant, de préférence, des sections identiques, l'agrafage axial des spires d'une bande étant réalisé par l'emboîtement des deux portées radiales d'agrafage avec les portées radiales correspondantes des spires de l'autre bande. Il est possible encore, de réaliser la nappe constituant la carcasse par l'enroulement hélicoïdal de trois, ou même plus de trois bandes profilées en S. Dans la pratique, le nombre de bandes est limité, en fonction du rapport entre la largeur de la bande et le diamètre d'enroulement, de façon à ce que l'angle de l'hélice dessinée par la bande enroulée soit, par rapport à l'axe de la conduite flexible, suffisamment élevé, de préférence supérieur à environ 80°. De façon semblable, lorsque la carcasse est constituée par deux nappes comprenant des bandes profilées complémentaires, chacune des nappes peut être réalisée par l'enroulement hélicoïdal de deux, ou de plus de deux bandes profilées, les différentes bandes d'une même nappe présentant, de préférence, des sections identiques, et les bandes d'au moins une des deux nappes présentant au moins un caisson.

Dans un premier mode de réalisation, les deux parties latérales formant portée d'agrafage axial présentent une forme de caisson.

Dans un second mode de réalisation, l'une des parties latérales présentant la forme d'un caisson, l'autre partie latérale de la bande profilée constitue un bord d'accrochage présentant, dans une vue en section droite de la bande profilée, la forme d'un tronçon incurvé ou rectiligne, ce tronçon étant oblique ou de préférence perpendiculaire par rapport à l'axe longitudinal de la carcasse. Dans une variante recommandée de ce second mode de réalisation, ledit bord d'accrochage présente dans une vue en section droite de la bande profilée, la forme d'un segment rectiligne prenant appui perpendiculairement sur la portée cylindrique en regard.

Dans une variante avantageuse de réalisation, la carcasse selon la présente invention comporte au moins une bande profilée comportant au moins un caisson de section sensiblement rectangulaire et au moins une partie centrale cylindrique constituant une portée d'appui radial.

Dans un mode de réalisation particulièrement avantageux, la paroi constituant les diverses parties de la bande profilée selon l'invention présente une épaisseur sensiblement constante. La bande profilée est ainsi réalisée à partir d'un ruban métallique du genre "feuillard", ledit ruban étant mis en forme pour présenter la configuration désirée de bande profilée avec deux portées radiales d'agrafage axial, l'un au moins des deux bords longitudinaux du ruban étant replié de façon à former un caisson de section sensiblement fermée. L'utilisation des caissons permet d'améliorer la résistance mécanique à la pression interne et/ou externe de la carcasse selon la présente invention. De plus, la présence des caissons permet de faciliter la réalisation, notamment par pliage de rubans métalliques, de la carcasse selon la présente invention par rapport au feuillard agrafé connu.

La bande profilée selon la présente invention peut présenter des dimensions très variées. L'épaisseur de la paroi constituant les diverses parties de la bande profilée est définie, cas par cas, en fonction du diamètre de la conduite flexible formée et de la résistance mécanique désirée ; elle peut valoir, en fonction des caractéristiques, entre environ 0,5 mm et 4 mm ou même 5 mm. Il est ainsi possible de réaliser des conduites tubulaires flexibles d'un diamètre interne relativement faible, 50 mm par exemple, ou relativement important, jusqu'à 500 mm environ. Par comparaison avec les bandes profilées à double agrafage de type connu, l'utilisation de la bande profilée selon la présente invention est particulièrement avantageuse dans le cas de conduites flexibles présentant un diamètre important et/ou une résistance élevée à l'écrasement, l'épaisseur de la paroi pouvant atteindre une valeur élevée, supérieure aux épaisseurs maximales des bandes profilées à double agrafage.

L'invention a principalement pour objet une carcasse selon l'une quelconque des revendications 1 à 11.

L'invention a aussi pour objet une conduite tubulaire flexible selon l'une quelconque des revendications 12 à 15.

L'invention sera mieux comprise au moyen de la description ci-après, et des figures annexées, données comme exemples non limitatifs parmi lesquelles :

- la figure 1 est une vue schématisée éclatée partiellement en coupe longitudinale d'un premier mode de réalisation de conduite tubulaire flexible selon la présente invention ;

- la figure 2 est une vue analogue d'un deuxième mode de réalisation de conduite tubulaire flexible selon la présente invention ;
- la figure 3 est une vue analogue d'un troisième mode de réalisation de conduite tubulaire flexible selon la présente invention ;
- la figure 4 est une vue analogue d'un quatrième mode de réalisation de conduite tubulaire flexible selon la présente invention ;
- la figure 5 est une vue en coupe d'un premier exemple de réalisation d'une carcasse tubulaire selon la présente invention ;
- la figure 6 est une vue en coupe d'un deuxième exemple de réalisation de carcasse tubulaire flexible selon la présente invention ;
- la figure 7 est une vue en coupe d'un troisième exemple de réalisation de carcasse tubulaire flexible selon la présente invention ;
- la figure 8 est une vue en coupe d'un quatrième exemple de réalisation de carcasse tubulaire flexible selon la présente invention ;
- la figure 9 est une vue en coupe d'un cinquième exemple de réalisation de carcasse tubulaire flexible selon la présente invention ;
- la figure 10 est une vue en coupe d'un sixième exemple de réalisation de carcasse tubulaire flexible selon la présente invention ;
- la figure 11 est une vue en coupe d'un septième exemple de réalisation de carcasse tubulaire flexible selon la présente invention ;
- la figure 12 est une vue en coupe d'un huitième exemple de réalisation de carcasse tubulaire flexible selon la présente invention ;
- la figure 13 est une vue en coupe d'un neuvième exemple de réalisation de carcasse tubulaire flexible selon la présente invention ;
- la figure 14 est une vue en coupe d'un dixième exemple de réalisation de carcasse tubulaire flexible selon la présente invention ;
- la figure 15 est une vue en coupe d'un onzième exemple de réalisation de carcasse tubulaire flexible selon la présente invention ;
- la figure 16 est une vue en coupe d'un douxième exemple de réalisation de carcasse tubulaire flexible selon la présente invention ;
- la figure 17 est une vue en coupe d'un treizième exemple de réalisation de carcasse tubulaire flexible selon la présente invention ;
- la figure 18 est une vue en coupe d'un quatorzième exemple de réalisation de carcasse tubulaire flexible selon la présente invention ;
- la figure 19 est une vue en coupe d'un quinzième exemple de réalisation de carcasse flexible selon la présente invention ;
- la figure 20 est une vue en coupe d'un seizième exemple de réalisation de carcasse flexible selon la présente invention ;
- la figure 21 est une vue en coupe d'un dix-septième exemple de réalisation de carcasse flexible selon la présente invention ;
- la figure 22 est un schéma illustrant douze exemples de formes de caissons, susceptibles d'être mis en oeuvre, de la carcasse selon la présente invention ;
- la figure 23 est une vue schématique d'un moyen empêchant la déformation des caissons susceptibles d'être mis en oeuvre dans la carcasse selon la présente invention ;
- la figure 24 est un schéma explicatif ;
- la figure 25 est une vue schématique d'un premier exemple de dispositif susceptible d'être mis en oeuvre pour le spiralage de la carcasse selon la présente invention ;
- la figure 26 est une vue schématique d'un deuxième exemple de dispositif susceptible d'être mis en oeuvre pour le spiralage de la carcasse selon la présente invention ;
- la figure 27 est une vue schématique d'un troisième exemple de dispositif susceptible d'être mis en oeuvre pour le spiralage de la carcasse selon la présente invention.

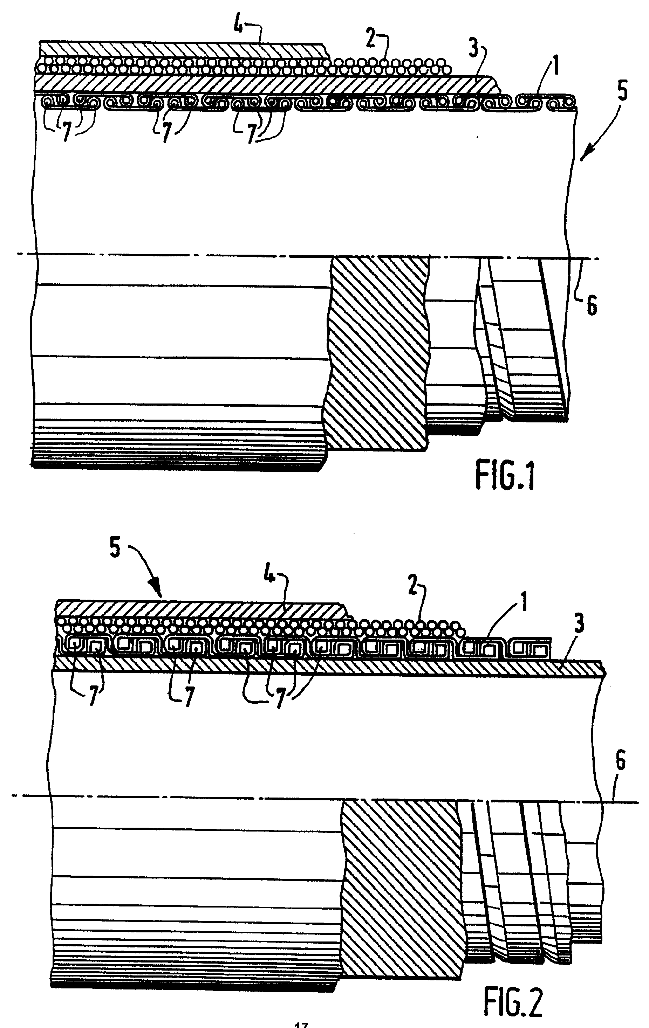

Sur les figures 1 à 27, on a utilisé les mêmes références pour désigner les mêmes éléments.

Sur la figure 1, on peut voir une conduite tubulaire flexible de type "rough bore" comportant une carcasse tubulaire 1 comprenant des caissons 7. La carcasse illustrée sur la figure 1 est constituée par exemple par deux bandes profilées complémentaires enroulées hélicoïdalement avec un faible pas, de manière à former deux nappes de spires telles que les spires d'une nappe sont agrafées axialement par emboîtement avec les spires de l'autre nappe.

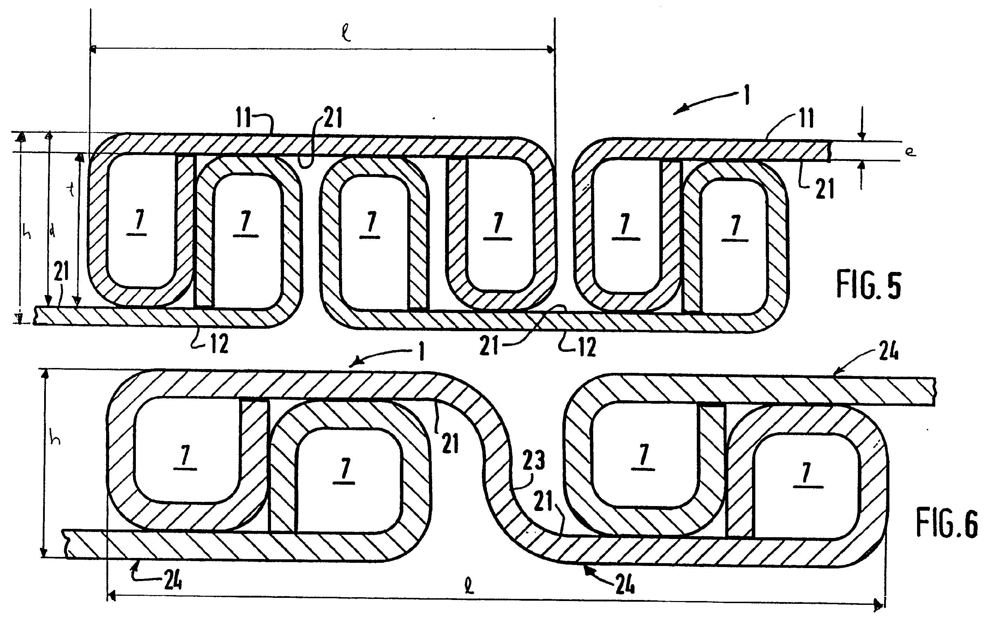

Des exemples de sections des carcasses selon la présente invention sont décrites sur les figures 5 à 25.

Les conduites tubulaires flexibles 5, d'axe 6 comportent, outre la carcasse interne 1, une armure 2 de résistance à la traction et à la pression intérieure, constituée de préférence d'une ou plusieurs paires de nappes croisées de fils d'armage métalliques ou en matériaux composites résistant à la traction. Enfin, la conduite tubulaire flexible comprend une gaine interne d'étanchéité 3 disposée entre la carcasse 1 et l'armure 2 ainsi qu'une gaine externe 4.

Sur la figure 2, on peut voir une conduite tubulaire flexible de type "smooth bore" dont l'étanchéité est assurée par un tube interne 3 s'appuyant sur une carcasse tubulaire 1 constituée par exemple par une bande profilée selon la présente invention, la bande profilée ayant une configuration générale en forme de S et formant ainsi une nappe simple de spires agrafées mutuellement dans le sens axial.

La carcasse de la conduite tubulaire flexible 5 de la figure assure d'une part la résistance à l'écrasement et d'autre part la résistance à la composante circonférentielle induite par la pression interne.

La résistance à l'écrasement facilite la fabrication et la manipulation de la conduite tubulaire flexible, et permet de résister à la pression hydrostatique, la conduite étant posée au fond de la mer, lorsque la pression à l'intérieur de la conduite est inférieure à la pression hydrostatique, soit, par exemple, égale à la pression atmosphérique. De plus, dans le cas de conduites tubulaires flexibles de type "rough bore" illustrées sur la figure 1, la carcasse 1 constitue un appui résistant pour la gaine 3 et permet ainsi de résister à la pression d'un gaz se trouvant entre les gaines 3 et 4, et provenant de la diffusion progressive à travers la gaine d'étanchéité 3 d'une phase gazeuse présente dans le fluide sous pression transporté par la conduite flexible 5. La carcasse 1 permet ainsi, en cas de dépressurisation de la conduite flexible, d'empêcher la déformation ou l'écrasement de la gaine 3 sous l'effet de la pression créée par la diffusion du gaz.

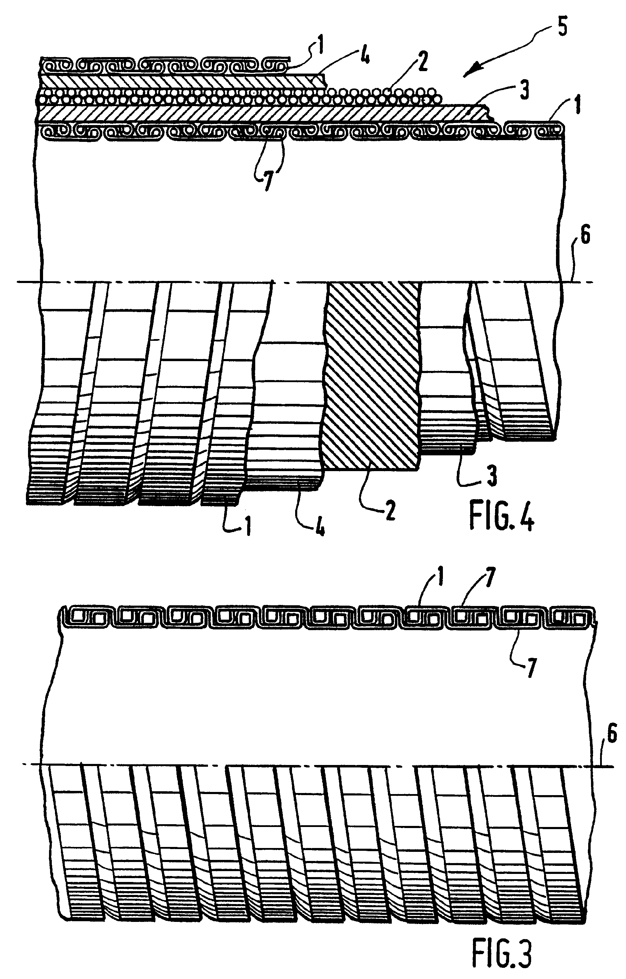

La carcasse 1 selon la présente invention peut constituer à elle seule une conduite tubulaire flexible. Un tel cas est illustré sur la figure 3. L'exemple illustré sur la figure 3 comporte au moins une bande en forme de S comportant un caisson 7 sur chacun de ces bords principaux. Il est bien entendu que l'utilisation d'autres profils comportant des caissons 7 ne sort pas du cadre de la présente invention.

De même, comme illustré sur la figure 4, la carcasse 1 selon la présente invention peut former une couche de protection extérieure d'une conduite tubulaire flexible 5. La carcasse extérieure 1 recouvre (comme illustré sur la figure 4) ou remplace la gaine externe 4 des figures 1 et 2. Une telle carapace métallique améliore la protection contre les chocs et l'abrasion. Une telle protection peut être nécessaire pour protéger la conduite tubulaire flexible lors de manipulations, par exemple sur un chantier de forage ainsi que de l'abrasion par exemple par déplacement avec frottement sur des récifs coraliens ou un fond marin rocheux. La conduite flexible 5 illustrée en figure 4 comprend également une autre carcasse 1 selon la présente invention constituant la carcasse interne de la conduite flexible du type "Rough bore".

Les figures 5 à 24 illustrent divers exemples de réalisation de carcasse 1 selon la présente invention.

Les figures 5 à 21 présentent divers exemples de carcasse 1 comprenant des bandes profilées dont la paroi présente une épaisseur constante et qui sont constituées par un ruban métallique mis en forme de façon à présenter la configuration générale d'une bande profilée selon la présente invention avec 2 portées radiales d'agrafage axial dont l'une au moins est un caisson 7.

Sur la figure 5, on peut voir un premier exemple de réalisation des carcasses 1 selon la présente invention utilisant une première bande 11 et une seconde bande 12 de formes complémentaires qui constituent, respectivement, une première nappe et une seconde nappe de la carcasse 1. Chaque bande profilée 11 et 12 présente deux portées radiales orientées dans le même sens de chaque côté de la partie centrale cylindrique de la bande. Les portées radiales des deux bandes se font face mutuellement, ce qui permet d'assurer l'agrafage axial des spires et leur positionnement relatif dans la longueur de la conduite flexible formée. Dans le cas de l'exemple illustré sur la figure 5, les deux portées radiales de chaque bande sont des caissons 7. On dit que chacune des bandes 11 et 12 présente une épaisseur constante et qui sont constituées par un ruban métallique mis en forme de façon à présenter la configuration générale d'une bande profilée selon la présente invention avec deux portées radiales d'agrafage axial dont l'une au moins est un caisson 7.

Les figures 5 à 12 illustrent une première variante de réalisation de bandes profilées selon l'invention constituées par un ruban métallique, ou feuillard, selon laquelle l'extrémité d'au moins une des deux parties latérales du feuillard est repliée de façon à prendre la forme d'un bord droit s'inscrivant dans un plan sensiblement perpendiculaire à l'axe 6 de la conduite flexible et à constituer une première face radiale d'un caisson 7, cette première face radiale étant, par rapport au caisson, située du côté de la partie médiane de la bande perforée. Selon cette variante, l'extrémité de la partie latérale du feuillard constituant la première face radiale du caisson vient perpendiculairement en appui, par sa tranche, sur la zone cylindrique de la bande profilée qui lui fait face, de façon à former un caisson 7 sensiblement fermé. Du fait de la rigidité du feuillard constituant les parois de la bande profilée, cette configuration permet d'empêcher les déformations de la bande profilée, en particulier dans le sens radial, ce qui permet d'augmenter la résistance de la carcasse 1 à l'écrasement.

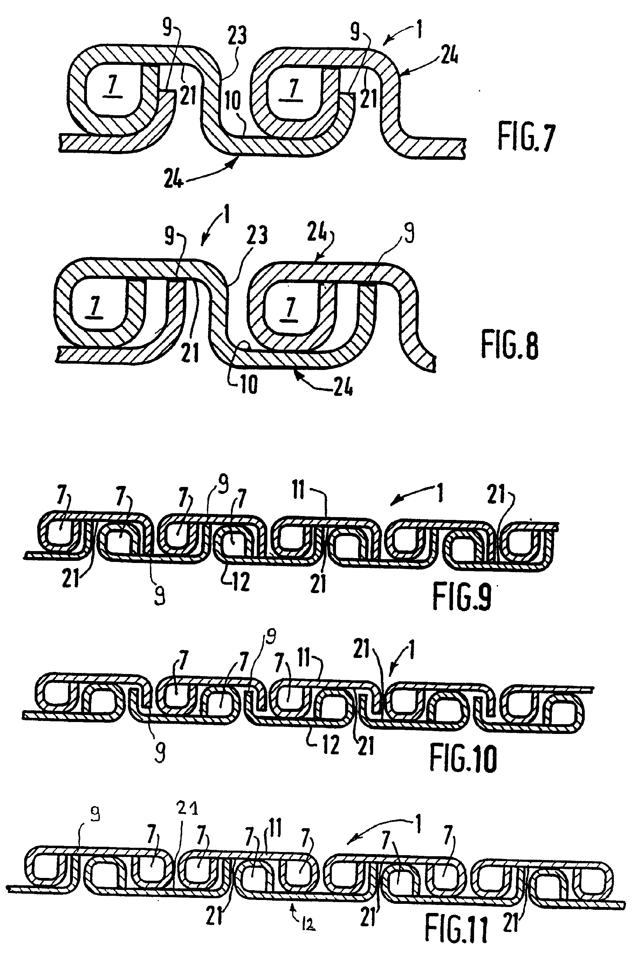

Sur la figure 7, on peut voir un premier exemple de réalisation des carcasses 1 selon la présente invention utilisant une première bande 11 et seconde bande 12 de formes complémentaires qui constituent, respectivement une première nappe et une seconde nappe de la carcasse 1. Chaque bande profilée 11 et 12 présente deux portées radiales orientées dans le même sens de chaque côté de la partie centrale cylindrique de la bande. Les portées radiales des deux bandes se font face mutuellement, ce qui permet d'assurer l'agrafage axial des spires et leur positionnement relatif dans la longueur de la conduite flexible formée. Dans le cas de l'exemple illustré par la figure 5, les deux portées radiales de chaque bande sont des caissons 7.

On dit que chacune des bandes 11 et 12 est en forme de lunettes dans la mesure où elles présentent, vue en section droite, à chacune de leurs extrémités, un caisson 7 relié par une portée médiane cylindrique. Chaque caisson 7 comporte une face cylindrique qui constitue le prolongement de la portée médiane cylindrique, de sorte que les bandes 11 et 12 présentent chacune une surface extérieure cylindrique continue servant de portée d'appui radial. Les surfaces intérieures et extérieures de la carcasse 1 peuvent ainsi présenter une forme cylindrique à peu près continue, les discontinuités étant limitées aux espaces séparant deux spires contigües, ce qui permet d'assurer un bon appui pour les gaines plastiques et les nappes d'armure en contact avec la carcasse 1, et de réaliser la transmission des efforts radiaux dans d'excellentes conditions. Entre les caissons 7 de chaque bande 11 ou 12 est aménagé un espace suffisant en forme de U formant une cuvette 21 pour laisser pénétrer deux caissons 7 appartenant à deux spires de la bande complémentaire 12 ou 11 respectivement. Dans l'exemple illustré sur la figure 5, les caissons 7 de chacune des bandes 11 et 12 sont formés par repliement vers l'intérieur et appui perpendiculairement à la portée médiane cylindrique (fond du U 21) de la bande. Les caissons 7 ont avantageusement une section sensiblement rectangulaire avec des coins arrondis. Chaque caisson s'appuie par une face sensiblement plate sur la portée médiane cylindrique de la bande complémentaire. Cette disposition permet d'optimiser la résistance à l'écrasement de la carcasse 1 pour une épaisseur de tôle donnée.

La résistance mécanique de la carcasse 1, en particulier sa résistance à l'écrasement, peut être évaluée en faisant des essais, ou par le calcul. A cet effet les Sociétés Déposantes ont mis au point des méthodes de calculs particulières applicables aux structures tubulaires flexibles constituées par l'enroulement hélicoïdal à faible pas d'une bande profilée ou d'un fil compact de forme quelconque. Ces méthodes, qui s'appuient sur les lois générales de la mécanique, permettent d'introduire certains facteurs spécifiques qui ont été déterminés, en correlation avec les résultats des essais qui ont été réalisés sur un grand nombre d'échantillons de carcasses de configurations et de dimensions variées.

On décrit ci-dessous les caractéristiques d'un Exemple 1 de carcasse 1 de même type que celle illustrée par la figure 5, avec deux bandes complémentaires 11 et 12 comportant chacune deux caissons 7 dont les bords de fermeture sont jointifs.

- épaisseur de la paroi (c'est-à-dire épaisseur du feuillard constituant la bande profilée)

  e = 2,1 mm
- épaisseur totale de la carcasse dans le sens radial par rapport à la conduite tubulaire formée (c'est-à-dire hauteur totale vue en section droite des deux bandes 11 et 12)

  h = 20,1 mm
- largeur totale de chacune des bandes profilées 11 et 12

  l = 81 mm
- largeur totale du ruban métallique, ou feuillard, constituant chacune des bandes 11 et 12 (c'est-à-dire longueur développée du profil dessiné par la bande profilée vue en section droite)

  L = 155 mm
- diamètre intérieur de la conduite tubulaire flexible constituée par la carcasse 1

  D = 304,8 mm (12 pouces)

La carcasse 1 présentant ainsi un poids de 64 kg pour une longueur de conduite tubulaire flexible de 1 mètre, il a été trouvé que la résistance à l'écrasement atteint 130 bars si le matériau utilisé est un acier inoxydable austénitique conforme à la norme AISI 316.

La pression limite ainsi déterminée correspond au cas de l'écrasement par effet de pression hydrostatique, c'est-à-dire avec la conduite flexible soumise à une pression extérieure uniforme.

Il en résulte que la carcasse 1 selon l'Exemple 1 peut être utilisée dans des profondeurs d'eau pouvant varier entre environ 650 m et 850 m, en fonction, en particulier, des coefficients de sécurité adoptés et des codes de calculs applicables aux termes des règlements.

Par comparaison, une carcasse constituée par une bande profilée à double agrafage selon l'art antérieur, réalisée avec le même matériau et présentant le même diamètre intérieur, atteint un poids de 76,7 kg/m pour offrir la même résistance à l'écrasement égale à 130 bars.

Dans ce cas, la carcasse 1 selon la présente invention permet donc de réaliser une réduction de poids égale à 16,5 % par comparaison avec la carcasse équivalente selon l'art antérieur. Outre l'économie qui en résulte concernant les coûts de fabrication, cette réduction de poids présente un intérêt extrême dans le cas des conduites devant être déposées dans des profondeurs d'eau importantes, dépassant par exemple 500 m, et pouvant atteindre ou dépasser 1000 m ou même 1500 m, en fonction, en particulier, du diamètre de la conduite flexible.

La résistance à l'écrasement de la carcasse peut être augmentée, en particulier, en augmentant l'épaisseur e de la paroi.

Ainsi, dans le cas d'un Exemple 2 d'une carcasse 1 présentant une configuration semblable à l'Exemple 1, avec un diamètre intérieur de la conduite tubulaire formée égal à 292 mm, l'épaisseur e a été portée à 3 mm, l'épaisseur totale h de la carcasse atteignant 23 mm. On obtient alors une résistance à l'écrasement de 166 bars pour un poids unitaire de 88,9 kg/m.

La variante de carcasse selon la présente invention illustrée sur les figures 5, 9, 10, 11, 12, 16, 17, 19, 20 et 21 comporte deux nappes constituées chacune par une bande profilée, les deux bords de chaque nappe formant portées d'agrafage axial et étant orientés dans le même sens par rapport à l'axe 6 de la conduite tubulaire flexible. Les portées d'agrafage axial de chacune des deux nappes sont orientées en direction de l'autre nappe de façon à former, tête-bêche, un profil en forme de U.

Sur la figure 6, on peut voir une carcasse 1 constituée par une bande profilée 24 en forme de S comportant des caissons 7 dans deux parties latérales, chaque caisson pénétrant dans une cuvette 21 formée entre les caissons 7 de la spire contigüe et la barre transversale 23 du S. Le spiralage de la carcasse 1 peut être effectué en utilisant une bande unique, ou une pluralité de bandes de feuillards 24 en forme de S, enroulées parallèlement les unes aux autres, pour former une nappe unique de spires identiques agrafées.

On a pu ainsi définir les caractéristiques résumées ci-dessous, d'un Exemple 3 de carcasse 1 constituée par une bande profilée en S 24 comportant deux caissons 7 présentant des bords de fermeture jointifs, telle qu'illustré par la figure 6 :
- épaisseur de la paroi $e = 2,9$ mm
- épaisseur totale de la carcasse $h = 20,9$ mm
- largeur de la bande profilée $l = 84$ mm
- largeur totale du feuillard $L = 192$ mm
- diamètre interne $D = 304,8$ mm

Cette carcasse a un poids de 83,7 kg/m et offre une résistance à l'écrasement de 130 bars lorsqu'elle est réalisée en acier inoxydable AISI 316.

Sur la figure 7, on peut voir une carcasse 1 comportant des bandes métalliques 24 comprenant un caisson 7 dans sa première partie latérale et un bord d'accrochage 9 formé par le bord latéral apposé au caisson 7 et constituant la seconde portée radiale d'agrafage axial. Chaque bande est sensiblement en forme de S. Le bord 9 pénètre dans la cuvette 21 formée par le caisson 7 et la barre d'accrochage 9 et la barre transversale 23 de la spire suivante.

Au contraire, dans le cas illustré sur la figure 8, l'extrémité du bord 9 repose au fond des cuvettes 21 et ainsi participe à la rigidité de la carcasse 1. La variante de la figure 8 présente donc une rigidité supérieure à celle de la variante de la figure 7.

Sur la figure 9, on peut voir un exemple de carcasse 1 selon la présente invention comportant deux bandes profilées complémentaires 11 et 12, la carcasse étant ainsi constituée de deux nappes. Chacune des bandes comporte à l'une de ses extrémités un caisson 7 et à l'autre extrémité un bord d'accrochage 9. Chaque caisson 7 d'une spire et chaque bord d'accrochage 9 de la spire contigüe de la même bande 11 ou 12 pénètre dans la cuvette 21 formée entre le bord d'accrochage 9 et le caisson 7 d'une même spire de l'autre bande 12 ou 11.

Sur la figure 10, on peut voir un exemple de réalisation de la carcasse 1 selon la présente invention dans lequel, d'une part, le sens selon lequel sont disposés respectivement le caisson 7 et le bord d'accrochage 9 d'une même spire de l'une des bandes 12 par rapport à l'autre bande est inversé par rapport à l'exemple de la figure 9, et où, d'autre part, le bord d'accrochage 9 de chaque bande 11 (ou 12) ne touche pas la cuvette 21 de l'autre bande 12 (ou 11).

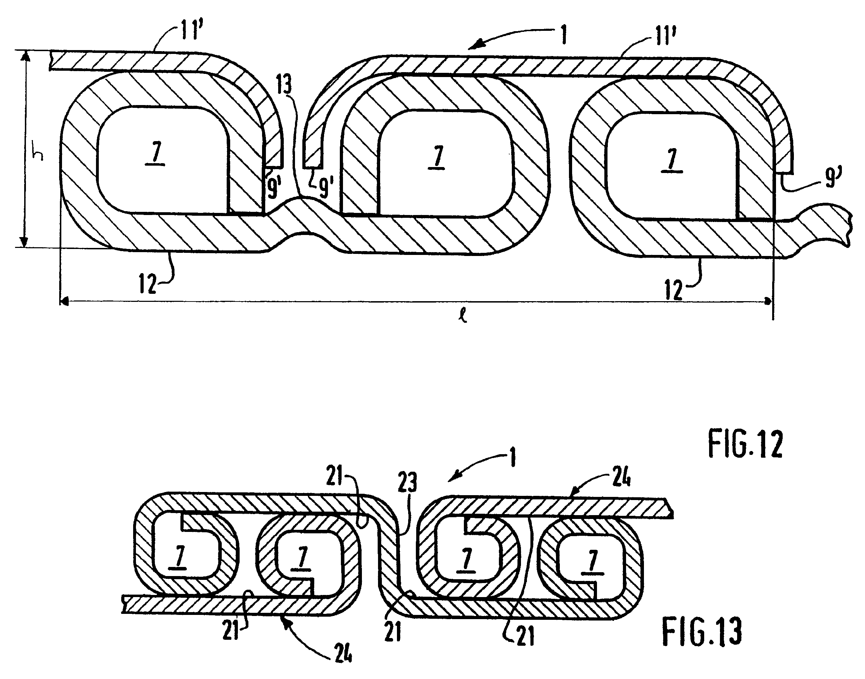

Sur la figure 11, on peut voir une exemple de réalisation de la carcasse 1 selon la présente invention utilisant deux bandes complémentaires 11 et 12 présentant une cuvette centrale 21. La bande 11, en forme de lunettes comporte un caisson 7 à chacune de ses extrémités principales. La bande 12 comporte des caissons 7 à une extrémité et un bord d'accrochage 9 à l'extrémité opposée. Dans chaque cuvette 21 de la bande 11, pénètre un bord radial de la bande 12 formant la spire précédente et un caisson 7 de la bande 12 formant la spire suivante. Dans chaque cuvette 21 de la bande 12 pénètrent deux caissons 7 appartenant à deux spires contigües de bande 11.

Sur la figure 12, on peut voir une variante particulièrement avantageuse de la carcasse selon la présente invention. La carcasse 1 comporte d'une part une bande 12 en forme de lunettes comportant un caisson 7 à chacune de ses extrémités principales et constituant une première nappe, et, d'autre part une seconde nappe comportant une bande complémentaire 11' dont les deux bords latéraux constituent des portées radiales permettant d'assurer l'agrafage axial de la carcasse 1 en coopération avec les caissons 7 de la bande 12.

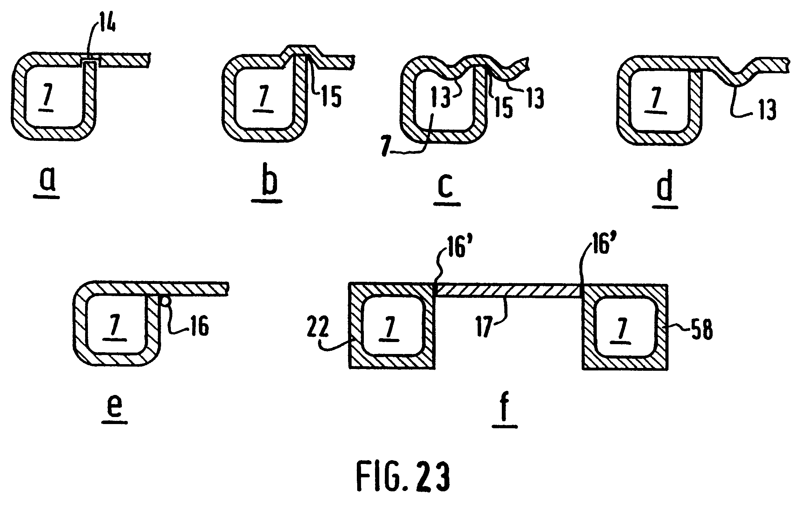

Avantageusement, la bande 12 comporte des moyens 13 empêchant les déversements ou les déplacements de ses extrémités. Dans l'exemple illustré sur la figure 12, les moyens 13 consistent en une bosse séparant le caisson 7 et empêchant leurs ouvertures. D'autres moyens destinés à empêcher le risque de déversement ou d'ouverture déjà extrêmement faible sont illustrés sur la figure 23.

Le jeu axial entre les bandes 12 est limité par les bandes 11' en forme de U formant un circlip. Les extrémités 9' des deux bandes 11' adjacentes peuvent pénétrer dans des cuvettes formées entre les caissons 7 des bandes 12.

Il est bien entendu que la prolongation des extrémités radiales 9' des branches de U de façon à les faire reposer sur la portée principale des bandes 12 ne sort pas du cadre de la présente invention.

Les bandes 11' présentent une bonne surface d'appui pour servir d'assise pour la gaine d'étanchéité 3. Ainsi, dans le cas de conduites tubulaires flexibles de type "rough bore", illustrées sur les figures 1 et 4, les bandes 11' sont placées vers l'extérieur. Dans le cas de conduites "smooth bore" illustrées sur la figure 2 le contraire se produit, les bandes 11 étant dirigées vers la surface externe du tube d'étanchéité interne 3, et les bandes 12 étant du côté extérieur de la carcasse 1.

Dans une autre variante non illustrée du même mode de réalisation selon lequel la carcasse comprend une première nappe constituée par une bande profilée dont les deux portées d'agrafage axial sont orientées dans le même sens par rapport à l'axe de la conduite tubulaire flexible, l'agrafage axial étant assuré par une bande complémentaire présentant une section en forme de U, la bande profilée constituant la première nappe comporte à une extrémité un caisson et à l'autre extrémité un bord d'accrochage.

Les figures 13 à 21 illustrent une autre variante de réalisation d'une carcasse comportant une bande profilée présentant une paroi d'épaisseur sensiblement constante et constituée par un feuillard mis en forme, variante selon laquelle au moins une des deux parties latérales du feuillard est formée de façon à constituer un caisson 7, l'extrémité du bord du feuillard étant repliée et prenant appui tangentiellement sur la zone cylindrique formant portée d'appui radial de la carcasse qui lui fait face, de telle sorte que le caisson 7 présente une section sensiblement fermée.

Dans une variante de réalisation illustrée par la figure 13, l'extrémité du bord du feuillard prend appui tangentiellement vers l'intérieur du caisson 7 sur la portée cylindrique d'appui radial qui constitue l'une des deux faces cylindriques du caisson 7.

Sur la figure 13, on peut voir une variante de réalisation de la carcasse 12 selon la présente invention, comportant au moins une bande 24 en forme de S. Dans l'exemple illustré sur la figure 13, le bord libre des caissons 7 qui constitue l'extrémité latérale du feuillard est replié et son extrémité vient s'appuyer sur la partie latérale de la cuvette 21 de la bande profilée qui constitue une première face cylindrique du caisson 7, le caisson prenant appui par une face cylindrique opposée à ladite première face dans la cuvette 21 de la spire adjacente.

La même configuration d'appui tangentiel vers l'intérieur du caisson 7 du bord de la bande profilée assurant la fermeture de la section du caisson est également possible dans le cas (non représenté) d'une bande profilée en forme de S avec un seul caisson 7, le deuxième bord de la bande étant réalisé sous forme de bord d'accrochage 9 (comme illustré sur les figures 7 ou 8), ou encore, par exemple, dans le cas (également non représenté) d'une bande profilée dont les deux parties latérales formant portée radiale d'agrafage axial sont orientées radialement dans le même sens, l'une au moins des deux portées radiales présentant une forme de caisson 7 avec le bord libre du caisson replié vers l'intérieur.

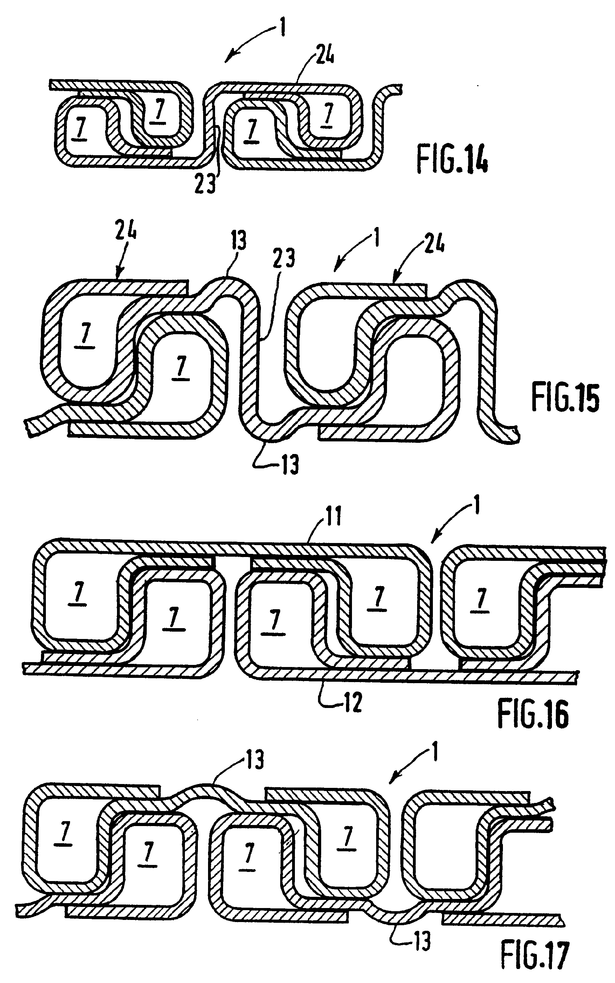

Sur les figures 14 à 21, l'extrémité du bord du feuillard prend appui tangentiellement à l'extérieur des caissons 7.

Sur les figures 14 et 15, on peut voir une carcasse comportant une bande 24 en forme de S. L'exemple illustré sur la figure 15 comporte an outre des bosses 13 permettant de fixer la position de l'extrémité du bord du feuillard constituant le bord libre du caisson et empêchant ainsi la déformation du caisson.

Sur les figures 16 et 17, on peut voir une carcasse 1 formée par deux bandes 11 et 12 en forme de lunettes. L'exemple illustré sur la figure 17 comporte une bosse 13 empêchant la déformation du caisson 7 de la même façon que la bosse 13 de la figure 15.

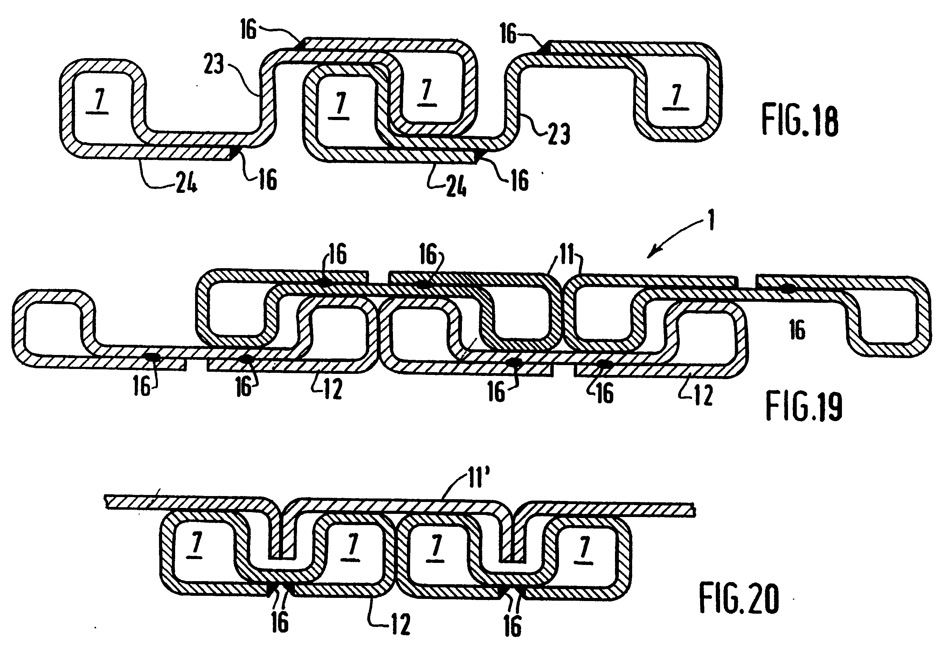

La figure 18 illustre une carcasse constituée par l'enroulement d'une bande profilée 24 présentant une forme en S de configuration analogue à celle illustrée par la figure 15, mais sans la bosse 13, la fixation du bord libre du caisson 7 étant assurée par des points de soudure ou un cordon de soudure 16. Dans le cas de la figure 19, chacune des deux portées cylindriques médianes séparées par la barre transversale 23 est entourée et consolidée sur une partie importante de leur longueur, par une portée cylindrique complémentaire formée par le prolongement du bord libre du caisson 7, ladite portée cylindrique complémentaire constituant une portée d'appui radial de la bande profilée.

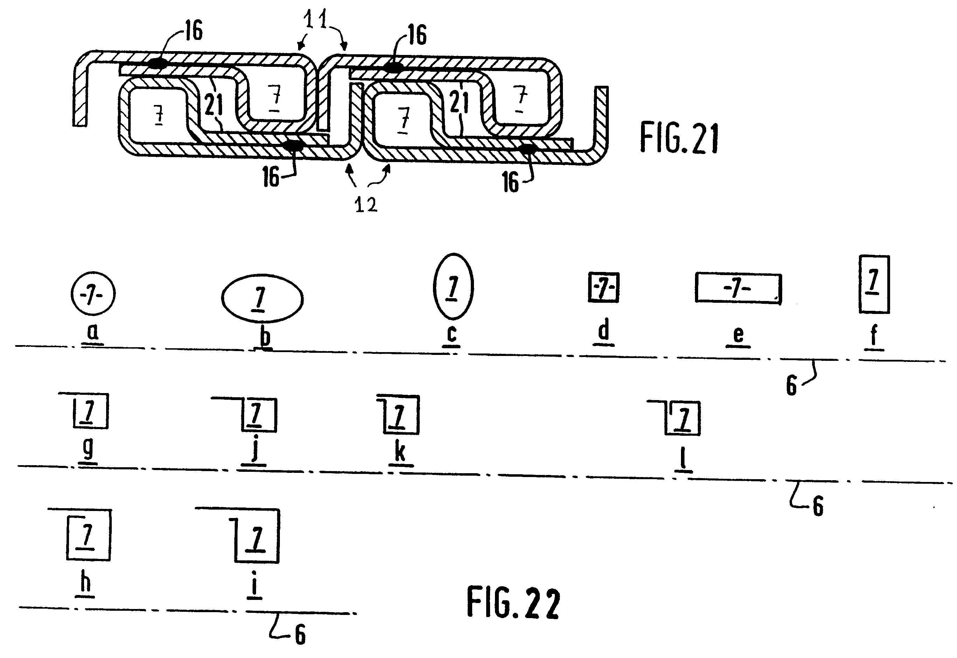

La figure 19 illustre une carcasse comportant deux bandes 11 et 12 en forme de lunettes de configuration analogue à la figure 17, mais sans la bosse 13, la fixation du bord libre du caisson 7 étant assurée en 16 par soudure. Dans l'exemple illustré sur les figures 19 et 21, la soudure 16 est effectuée entre tôles superposées.

Sur la figure 20, on peut voir une carcasse comprenant une première nappe constituée par l'enroulement d'une bande profilée 12 en forme de lunettes, l'agrafage axial étant réalisé, comme dans la variante illustrée en figure 12, par une seconde nappe constituée par l'enroulement hélicoïdal d'une bande complémentaire 11', en forme de U. Le blocage du bord libre des caissons 7 est assuré en 16 par soudure.

La figure 21 illustre une carcasse dont l'organisation générale est analogue à celle de la figure 10, en ce sens qu'elle est composée de deux bandes complémentaires 11 et 12, chaque bande comportant à l'une de ses extrémités un caisson 7 et à l'autre extrémité un bord d'accrochage 9. Mais, dans le cas de la figure 21, l'extrémité du bord libre du caisson 7 prend appui tangentiellement à l'extérieur des caissons 7 sur la portée cylindrique formée par la bande profilée, la position du bord libre étant fixée par la soudure 16.

Dans l'exemple de la figure 21, le prolongement du bord libre du caisson 7 de chaque bande 11, 12 constitue une portée cylindrique complémentaire prenant appui sur la cuvette 21 et consolidant ainsi la portée cylindrique médiane d'appui de la bande 11, 12, et constituant d'autre part une surface d'appui pour le caisson 7 de l'autre bande 12, 11.

Bien entendu, les bandes profilées présentant une section semblable à l'une de celles illustrées par les figures 18 à 21, mais ne présentant pas de points de soudure ou de cordon de soudure 16, ne sortent pas du cadre de l'invention.

Sur la figure 22, on peut voir divers exemples non limitatifs de sections des caissons 7 susceptibles d'être mises en oeuvre dans le dispositif selon la présente invention.

Le profil de la figure 22a a une forme d'anneau circulaire.

Sur la figure 22b, la section du caisson 7 forme un anneau elliptique dont le grand axe est parallèle à l'axe 6 de la conduite tubulaire flexible.

Par contre, dans le cas illustré sur la figure 22c, l'orientation du grand axe de l'ellipse est perpendiculaire à l'axe 6. Dans un exemple avantageux de réalisation du dispositif selon la présente invention, on utilise les caissons 7 comportant des faces ou parois radiales. L'exemple illustré sur la figure 22d correspond à un caisson de section carrée.

Les exemples des figures 22e et 22f comportent des caissons 7 de section rectangulaire, la longueur est parallèle ou, respectivement perpendiculaire à l'axe 6.

Sur les figure 22g à 22l, on a illustré divers exemples d'un mode de réalisation particulièrement avantageux, selon lequel la carcasse comprend au moins une bande profilée d'épaisseur sensiblement constante, constituée à partir d'un ruban métallique du genre "feuillard", ledit ruban étant mis en forme par profilage pour présenter la configuration désirée de bande profilée, l'un au moins des deux bords longitudinaux du ruban étant replié de façon à former l'une des faces d'un caisson de section sensiblement fermée.

Les exemples illustrés sur les figures 22g, 22h et 22i correspondent à des caissons directs, une portée cylindrique médiane de la bande profilée étant prolongée de sorte que son extrémité constitue un premier côté du caisson 7 formé par le profilage du feuillard.

Dans l'exemple illustré sur la figure 22g, l'extrémité du bord latéral du feuillard profilé formant le quatrième côté (ou bord libre) du caisson 7 est disposé perpendiculairement à la portée cylindrique et constitue ainsi l'élément de renforcement radial de la carcasse décrit ci-dessus comme étant la première face radiale du caisson 7, disposée du côté de la partie centrale de la bande profilée.

Dans les exemples illustrés sur les figures 22h et 22i, l'extrémité du bord latéral du feuillard profilé formant le bord libre du caisson 7 est repliée de façon à se trouver un appui tangentiel sur la portée cylindrique, vers l'intérieur et, respectivement, vers l'extérieur du caisson 7.

Sur les figures 22j, 22k et 22l, on peut voir des caissons 7 inversés. Pour de tels caissons, au lieu de constituer le prolongement de la surface cylindrique formée par la portée médiane de la bande profilée, le premier côté du caisson 7 réalisé par pliage du feuillard à angle droit constitue la première face radiale du caisson. Le quatrième côté formé par le profilage du feuillard et assurant la fermeture du caisson 7 constitue l'une des deux faces cylindriques du caisson.

Dans l'exemple avantageux illustré sur la figure 22k, l'extrémité de la paroi fermant les caissons 7 vient prendre appui, tangentiellement sur la portée cylindrique médiane. Dans l'exemple illustré sur la figure 22l, l'extrémité de la paroi fermant les caissons 7 est repliée et se trouve en appui tangentiel sur le premier côté du caisson 7.

Le caisson illustré sur les figures 7 à 14, 16 et 21 comporte des caissons de type direct.

Les carcasses illustrées sur les figures 16 et 17 à 20 comportent des caissons inversés.

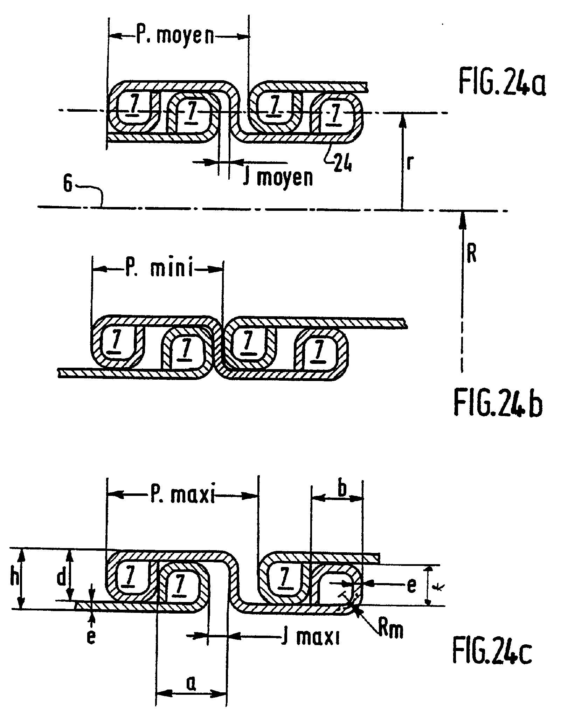

Lorsque la carcasse est réalisée par profilage d'un feuillard, il est avantageux de maintenir la courbure en tout point de la bande profilée en-dessous d'une certaine limite dans le but d'éviter la dégradation du matériau pouvant résulter, en particulier, en un risque de corrosion prématurée. Dans la pratique, il est recommandé que le rayon de courbure moyen aux endroits où la courbure est la plus forte soit au moins égal à 1,5 fois l'épaisseur du feuillard, le rayon de courbure moyen étant défini par la ligne au milieu de l'épaisseur du feuillard (comme illustré sur la figure 24c).

Les proportions caractérisant les bandes profilées vues en section peuvent varier en fonction, en particulier, de la configuration choisie et de la résistance mécanique désirée, ainsi que du procédé de réalisation utilisé pour la fabrication.

De préférence, le rapport h/e entre l'épaisseur totale h de la carcasse 1 dans le sens radial et l'épaisseur e de la paroi, dans le cas, des bandes profilées constituées par un feuillard, peut valoir entre environ 4 et environ 15, et, avantageusement, entre 5 et 12. Dans le cas par exemple, des variantes illustrées par les figures 5 et 6, il peut valoir, typiquement, entre 7 et 10.

De préférence, le rapport l/h entre la largeur totale l de la bande profilée et sa hauteur totale h peut valoir entre 1,5 et 6. Typiquement, il peut valoir entre 3 et 5 dans le cas, par exemple des variantes illustrées par les figures 5 et 6, et entre 2 et 3,5 dans le cas, par exemple, des figures 7 ou 8 et 12.

Sur la figure 23, on peut voir divers moyens empêchant le déplacement de l'extrémité du bord latéral du feuillard profilé, qui constitue le bord libre assurant la fermeture du caisson 7, ledit bord libre pouvant constituer un élément radial de la carcasse (caisson direct), ou une portée cylindrique complémentaire (caisson inversé).

Sur la figure 23a, un évidement 14 pratiqué dans l'épaisseur de la paroi constituant une portée cylindrique médiane d'une bande permet de recevoir l'extrémité de la paroi radiale fermant les caissons 7.

Sur les figures 23b à 23d, on a illustré divers exemples d'un mode de réalisation avantageux selon lequel les moyens pour empêcher le déplacement de l'extrémité latérale du feuillard profilé sont réalisés sous la forme d'une ondulation que présente le feuillard profilé.

Sur la figure 23b, une cuvette 15 est formée par déformation de la portée cylindrique en relief à l'extérieur de la bande profilée pour recevoir l'extrémité de la paroi radiale du caisson 7.

Dans le cas de la figure 23c, la cuvette 15 est définie par deux bosses 13 en relief à l'intérieur de la bande profilée.

Sur la figure 23d, est illustré le cas montré sur la figure 13. Dans ce cas, une seule bosse 13 faisant relief à l'intérieur de la bande profilée empêche l'ouverture du caisson 7.

Il est possible, comme illustré sur la figure 23e, d'utiliser une soudure 16 pour empêcher l'ouverture des caissons 7. On effectue par exemple, sur toute la longueur de la bande, des points de soudure espacés pour fixer sur une autre partie de la paroi de la bande profilée la position du bord latéral du feuillard profilé assurant la fermeture du caisson 7.

Dans une variante, on effectue une pluralité de cordons de soudure continus, éventuellement de façon ininterrompue sur toute la longueur de la bande profilée.

La soudure peut être faite à clin, aux points 16 comme illustré par les figures 18, 20 et 23e. Elle peut, en alternative être effectuée entre tôles superposées, comme illustré par les figures 19 et 21.

Il a été trouvé que, lorsque les moyens pour empêcher le déplacement de l'extrémité latérale du feuillard profilé sont réalisés de façon à fixer fermement la position de ladite extrémité latérale, en particulier par des joints de soudure ou cordons de soudure 16, il en résulte une augmentation avantageuse de la résistance à l'écrasement des carcasses comportant des bandes profilées présentant au moins un caisson et réalisées par profilage d'un feuillard. L'augmentation de la résistance à l'écrasement varie en fonction des caractéristiques de la bande profilée, mais il a été trouvé qu'elle est très importante. Par comparaison avec les cas où les bords libres d'extrémité fermant les caissons restent en appui continu sur une portée correspondante de la bande profilée tout en ayant la possibilité de se déplacer sous l'effet des contraintes mécaniques exercées et de provoquer ainsi une très légère déformation du caisson. Par exemple dans le cas des carcasses semblables aux Exemples 1, 2 et 3 décrits ci-dessus, il a été trouvé que l'augmentation de la résistance à l'écrasement obtenu en fixant, par exemple par soudure, le bord libre du caisson varie entre environ 30 % et environ 50 % en fonction des caractéristiques de la carcasse. On pense que l'explication de ce résultat surprenant est en relation avec la configuration hélicoïdale des bandes profilées continues qui constituent la carcasse.

Sur la figure 23f, on peut voir un caisson 7 formé par un tube ou un profilé 22. Le tube ou profilé 22 est soudé au point 16′ à un feuillard 17. L'autre extrémité de la tôle est soudée soit à un autre tube ou profilé 22 soit à une paroi radiale analogue à la paroi 9 de la figure 9 ; elle peut également être repliée pour former une telle paroi radiale.

L'utilisation de ces tubes ou profilés 22 permet de conférer une très grande rigidité radiale à la carcasse selon la présente invention. On peut notamment utiliser des épaisseurs variables sur un pourtour 58 du caisson 7 de façon à optimiser l'utilisation du métal. Dans un premier exemple de réalisation, on utilise un profilé standard par exemple en forme de tubes de section ronde, ovale, elliptique ou avantageusement carrée ou rectangulaire soudé à des feuillards 17. Ceci présente l'avantage d'utiliser des profilés 22 d'un faible coût.

Dans une seconde variante de réalisation, on réalise, par exemple par extrusion une bande complète 11, 12 ou 24 ayant des performances optimisées.

La carcasse selon la présente invention est caractérisée par le fait que les dimensions en section droite des bandes profilées sont telles que la carcasse présente, d'une part, un jeu radial pratiquement nul, et, d'autre part, un jeu axial compatible avec le rayon de courbure minimal que doit pouvoir supporter la conduite tubulaire flexible.

La figure 24 illustre, à titre d'exemples, les relations qui doivent être établies entre les dimensions d'une variante particulière de bande profilée de façon à satisfaire les conditions définies ci-dessus relatives au jeu axial et au jeu radial.

La bande profilée illustrée en figure 24 présente une forme de S comportant deux caissons. Elle est semblable à la variante décrite en figure 6, la section de la bande étant symétrique par rapport à un point central qui est le centre de la barre transversale 23. La bande est constituée par un feuillard profilé d'épaisseur e.

La carcasse la figure 24 présente un jeu radial nul du simple fait que l'épaisseur de la couche tubulaire constituée par l'emboîtement des spires successives de la bande profilée correspond ici à la hauteur h de la barre transversale 23 qui est égale à la somme de la hauteur d du caisson 7 et de l'épaisseur e du feuillard :

$$h = d + e$$

On notera que, dans le cas de la figure 24, chaque moitié d'une spire présente un double appui radial sur la moitié correspondante de la spire adjacente : appui du caisson 7 de la première spire sur la cuvette 21 de de la deuxième spire, et appui de la cuvette 21 de la première spire sur le caisson 7 de la deuxième spire.

On ne sort pas du cadre de l'invention dans le cas où au moins une des deux moitiés d'une spire est en appui simple sur la spire adjacente, ce qui correspond, par exemple, à la variante illustrée sur la figure 7.

On trouve de façon évidente qu'il est également possible de réaliser des carcasses 1 présentant un jeu radial nul dans le cas, par exemple, des bandes profilées du type lunettes telles qu'illustrées par la figure 5. Si l'on appelle t la hauteur dont dépasse un caisson par rapport au fond de la cuvette 21 adjacente appartenant à la même bande, il suffit que les caissons des 2 bandes complémentaires 11 et 12 présentent des valeurs identiques de hauteur t.

Le jeu axial est déterminé par l'amplitude possible de la course axiale entre deux spires adjacentes en fonction des positions respectives de leurs portées radiales d'agrafage axial, et dépend donc de l'amplitude maximale de la variation du pas de spiralage P entre le pas minimum P mini et le pas maximum P maxi.

La figure 24a montre deux spires adjacentes en position relative correspondant au pas moyen P moyen. Les mêmes spires sont montrées au pas minimum sur la figure 24b et au pas maximum sur la figure 24c.

On peut ainsi définir le jeu axial moyen J moyen :

$$J\ moyen\ =\ 1/2\ (P\ maxi\ -\ P\ mini)$$

ainsi que le jeu moyen relatif de la carcasse j :

$$j\ =\ J\ moyen/Pas\ moyen$$

avec P moyen = 1/2 (P maxi + P mini)

Le rôle du jeu moyen relatif j de la carcasse est très important, puisqu'il détermine le rayon de courbure minimum R mini que peut prendre la conduite tubulaire flexible, en fonction du rayon moyen r de la carcasse, selon la formule suivante :

$$R\ mini\ =\ 1/j\ x\ r$$

avec rayon de courbure R de la conduite compté à l'axe 6 de la conduite, et rayon moyen r de la carcasse compté à mi-épaisseur de la nappe tubulaire formée par l'emboîtement des spires. Le jeu moyen relatif détermine donc la flexibilité de la conduite tubulaire flexible.

On peut voir de même, que le jeu axial moyen J moyen (figure 24a) est égal à la moitié du jeu axial maximum J maxi (figure 24c), le jeu axial étant nul dans le cas du pas minimum (figure 24b).

Dans le cas de la figure 24, le jeu axial moyen J moyen est déterminé par les dimensions de la bande profilée de la façon suivante :

$$J\ moyen\ =\ 1/2\ J\ maxi\ =\ 1/2\ (a\ -\ b)$$

a étant la largeur de la cuvette 21 entre butées, et b étant la largeur du caisson 7.

On peut ainsi, dans le cas particulier, choisir les dimensions a et b de la bande profilée de façon à pouvoir obtenir le rayon de courbure minimum R mini désiré par la formule :

$$R\ mini\ =\ \frac{r\ x\ (P\ maxi\ +\ P\ mini)}{a\ -\ b}$$

Dans la pratique, on adopte couramment pour le jeu moyen relatif j, des valeurs de 5 à 15 %, mais des valeurs inférieures ou supérieures peuvent être adoptées en fonction des cas particuliers d'utilisation.

La réalisation d'une carcasse comportant une bande profilée ne présentant pas de symétrie (par exemple : systétrie par rapport au milieu de la barre transversale 23 dans le cas des profils en S, ou symétrie au plan médiateur de la portée cylindrique médiane dans les cas des profils "en lunettes") ne sort par du cadre de la présente invention.

Des carcasses 1 selon la présente invention sont avantageusement réalisées avec des matériaux métalliques par exemple en acier inoxydable, en acier au carbone, en alliage léger comportant de l'aluminium et/ou de magnésium ou en matériaux composites tel qu'un alliage d'aluminium comportant des fibres.

Pour réaliser la fabrication de la carcasse 1, on peut simplement, selon un procédé connu, utiliser une pluralité de rouleaux de cintrage pour incurver la bande profilée en lui communiquant une forme circulaire de rayon égal à celui de la conduite tubulaire flexible qui doit être produite, tout en réalisant l'emboîtement des spires successives les unes dans les autres. Les rouleaux de cintrage sont disposés circonférentiellement autour de l'axe 6 de la conduite à former, leur axe étant parallèle à l'axe 6.

La bande profilée est introduite dans le dispositif constitué par les rouleaux de cintrage en présentant un angle d'incidence par rapport à l'axe du dispositif qui correspond à l'angle de spiralage de la bande profilée autour de l'axe 6 une fois que la carcasse est assemblée, cet angle de spiralage étant important, de l'ordre de 80° à près de 90°.

Pour réaliser en continu de grandes longueurs de carcasse, on utilise un plateau tournant autour d'un axe de préférence horizontal. Les rouleaux de cintrage sont installés sur le plateau tournant autour de son axe. La bande profilée peut être disposée enroulée sur une bobine d'émission, cette bobine étant montée folle autour d'un axe solidaire du plateau tournant. Il est avantageux que ledit axe de rotation de la bobine d'émission soit disposé sur le plateau tournant en présentant un angle par rapport au plateau correspondant à l'angle de spiralage de la bande profilée. Alternativement, la bobine d'émission peut être montée en dehors du plateau tournant, sur un support tournant de préférence en synchronisme avec le plateau.

Selon une variante du procédé de fabrication de la carcasse, on utilise un feuillard de grande longueur enroulé sur une bobine d'émission qui peut être installée comme décrit ci-dessus sur le plateau tournant ou sur un support tournant solidaire du plateau. Le feuillard étant ainsi déroulé sous la forme d'un ruban plan, il est mis en forme par profilage de façon à présenter la section définie pour la bande profilée par le moyen d'une pluralité de paires de galets de profilage. Le feuillard passe ainsi successivement entre les deux galets de chaque paire, les profils des parties extérieures actives des galets étant dessinés de façon à assurer la déformation progressive du feuillard, selon une technique en soi bien connue.

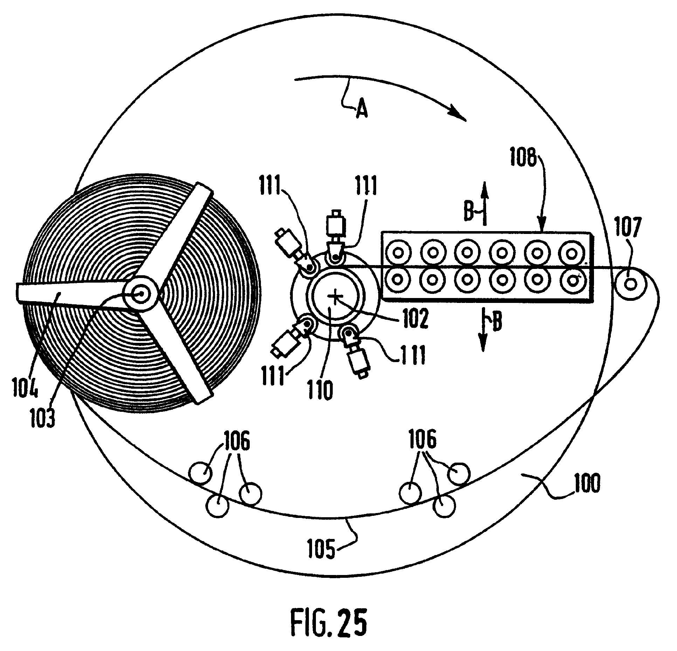

On peut ainsi utiliser le dispositif décrit dans le brevet français 83.19474 publié sous le n° 2.555.920 et tel qu'illustré sur la figure 25. Ce dispositif comprend un plateau circulaire 100 tournant selon la flèche A autour d'un axe horizontal 102 par des moyens d'entraînement non représentés. Dans l'exemple de réalisation illustré sur la figure 25, le plateau 100 comporte un organe 103 pour le support d'une bobine émettrice 104 d'alimentation en feuillard plat 105. Il est bien entendu que l'utilisation de bobines 104 non solidaires du plateau 100 ne sort pas du cadre de la présente invention. Le feuillard plat 105 se déroule de la bobine 104 et est guidé par un ensemble de rouleaux de guidage 106 puis par un mécanisme de renvoi 107 au travers d'un ensemble 108, destiné à communiquer au feuillard la forme désirée, notamment comportant les caissons 7. Dans un exemple non limitatif, l'ensemble 8 comporte deux blocs présentant par exemple six galets de profilage motorisés, les blocs étant écartables l'un de l'autre comme schématisé par les flèches B sur la figure 25.

De plus, l'ensemble 108 peut être déplacé par translation dans le plan du plateau 100 de manière que le feuillard sortant de l'ensemble des galets de profilage soit disposé tangentiellement par rapport à la surface extérieure du mandrin 110. Le feuillard profilé sortant de l'ensemble 108 des galets est appliqué à la périphérie du mandrin par exemple par une pluralité de rouleaux de cintrage 111 répartis autour du mandrin 110.

Le dispositif illustré par la figure 25 est utilisable dans le cas où la carcasse 1 est constituée d'une seule bande, par exemple la bande en S illustrée par la figure 6, ou les figures 7, 8, 13, 14, 15, 18 ou 24. Dans une variante non illustrée, on peut modifier les positions relatives de la bobine 104 et du dispositif de profilage 108 ainsi que des organes de guidage 106 et 107, de façon à disposer, par exemple, deux bobines d'émission 104 diamétralement opposées par rapport à l'axe 102, et, de la même façon, deux dispositifs de profilage 108 selon une direction diamétrale à peu près orthogonale à la direction définie par les bobines 104. On peut ainsi réaliser une carcasse comprenant deux bandes, en particulier dans le cas de deux bandes profilées présentant des profils complémentaires, telles qu'illustrées par les figures 5, 9, 10, 11, 16, 17, 19 ou 21, ou encore dans le cas d'une carcasse comprenant une bande profilée en forme de lunettes et une bande complémentaire en U sans caisson telle qu'illustrée en figure 12 ou 20. Un tel dispositif permet, en variante, de réaliser la carcasse 21 avec une nappe constituée par deux bandes profilées en S, les deux bandes étant spiralées simultanément, chaque spire d'une bande étant encadrée par deux spires de l'autre bande.

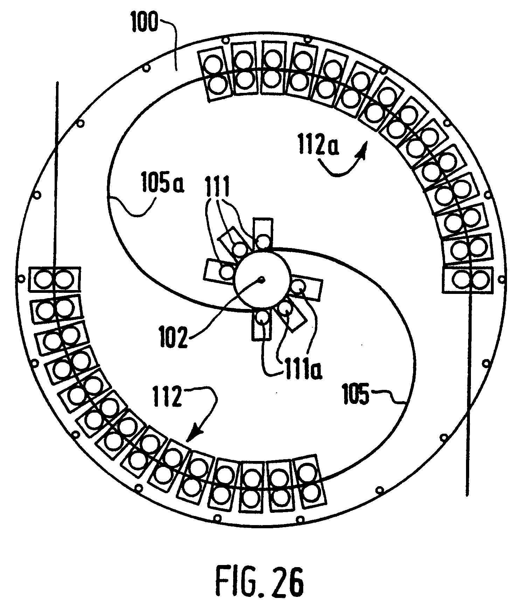

Dans une autre variante de réalisation du dispositif de fabrication de la carcasse 1 illustrée par la figure 26, deux feuillards plats 105 et 105a sont mis en forme par profilage en passant à travers des galets de profilage groupés par paires et formant deux ensembles de profilage 112 et 112a symétriques par rapport à l'axe 102. Les ensembles de profilage 112 et 112a dessinent approximativement deux arcs de cercle à la périphérie du plateau tournant 100, ce qui permet d'augmenter les dimensions, et en particulier le diamètre de la carcasse 1, ou d'utiliser un plateau 100 moins encombrant ou d'augmenter le nombre des galets de profilage. Deux séries de rouleaux de cintrage 111 et 111a sont disposés symétriquement autour de l'axe 102. Les feuillards 105 et 105a sont enroulés sur deux bobines d'émission 104 et 104a qui sont montées folles sur des supports (non illustrés) montés à distance du plateau 100 sur un chassis pouvant tourner autour de l'axe 102. Il est avantageux de disposer les deux bobines 104 et 104a coaxialement, l'une derrière l'autre, autour de l'axe 102, de l'autre côté de la longueur fabriquée de carcasse 1 par rapport au plateau 100. Un dispositif présentant ces caractéristiques est décrit dans le brevet US 4.783.980. Le dispositif illustré par la figure 26 est particulièrement intéressant pour fabriquer des carcasses de dimensions importantes. Il peut être amélioré en disposant quatre bobines d'émission coaxialement l'une derrière l'autre. Deux bobines sont utilisées pour le feuillard 105 avec une première bobine "active" utilisée pour fournir les quantités de feuillard 105 acheminées vers le plateau 100, et la deuxième bobine "non active" pouvant être chargée en une nouvelle longueur du feuillard 105 de façon à pouvoir devenir active à son tour et prendre le relai de la première bobine quand cette dernière est vidée et doit passer à son tour en situation non active pour être rechargée. Les deux autres bobines fonctionnent selon le même régime avec l'autre feuillard 105a. Le dispositif de fabrication illustré par la figure 26 peut, en variante, être outillé de façon à travailler avec un seul feuillard pour réaliser une carcasse 1 constituée par une bande profilée unique.

D'une façon générale, dans les cas où la position de l'extrémité du bord latéral du feuillard doit être fixée par des points de soudure ou par des cordons de soudure, y compris par une soudure continue, on peut réaliser la soudure en installant un équipement de soudure automatique sur le plateau 100, entre les galets de profilage 108 ou 112/112a et les rouleaux de cintrage 111/111a, la soudure pouvant être faite à clin ou entre tôles superposées.

Il est bien entendu que l'utilisation de l'équipement de soudure automatique selon l'invention, disposé sur le plateau 100 entre les organes de profilage d'un feuillard et les organes de cintrage, n'est pas limité à la soudure des caissons.

Dans un mode de réalisation différent du dispositif de fabrication de la carcasse 1, la bande profilée est fabriquée préalablement. Il est ainsi possible, par exemple, de réaliser la bande profilée dans une opération préliminaire, le feuillard plat étant mis en forme en le faisant passer à travers une pluralité de paires de galets de profilage montées alignées sur un chassis fixe, et la bande profilée ainsi réalisée étant stockée en l'enroulant au fur et à mesure sur une bobine. Le cas échéant, l'opération de profilage est complétée par l'exécution simultanée de points de soudure ou de cordons de soudure 16.

Alternativement, au lieu d'être réalisé par profilage à partir d'un feuillard plat, la bande profilée peut être fabriquée, préalablement à l'opération de spiralage final de la carcasse, à partir de profilés ou de tubes 22 préfabriqués, en particulier à partir de produits disponibles dans le commerce ; les éléments de profilés ou tubes 22 étant soudés les uns au bout des autres peuvent être raccordés par une soudure longitudinale 16', continue ou discontinue à un feuillard 17 pour constituer la bande profilée, le feuillard pouvant en outre être raccordé par soudure le long de son autre bord à d'autres profilés ou tubes 22.

La bande profilée ayant ainsi été fabriquée préalablement par l'un ou l'autre des procédés ci-dessus, ou tout autre procédé connu utilisable, et ayant été enroulée sur une bobine en une longueur continue qui peut correspondre à la longueur totale ou à une partie de la longueur de la carcasse 1 à produire, elle peut alors être transportée pour être mise en oeuvre par le dispositif de spiralage, désigné couramment sous le nom de spiraleuse. Dans un premier mode de réalisation, la bande profilée est disposée sur le plateau tournant de la spiraleuse, analogue au plateau 100 de la figure 25, l'ensemble de profilage 108 n'étant pas installé. Alternativement, la bande est montée sur un support séparé du plateau tournant 100 de la spiraleuse, ledit support séparé pouvant tourner autour de l'axe 102 du plateau de spiralage 100 ; dans le cas où la carcasse 1 est réalisée en utilisant deux bandes profilées fabriquées préalablement, on peut, en particulier, utiliser un dispositif semblable à celui illustré par la figure 26, les dispositifs de profilage 112 et 112a n'étant pas installés sur le plateau 100. La bobine d'émission supportant la bande profilée et installée sur le plateau 100 ou sur un support tournant peut être la bobine de stockage sur laquelle la bande avait enroulée au fur et à mesure de sa fabrication dans une phase préliminaire, ou bien la bande profilée peut avoir été transférée depuis la bobine de stockage sur une bobine d'émission particulière.

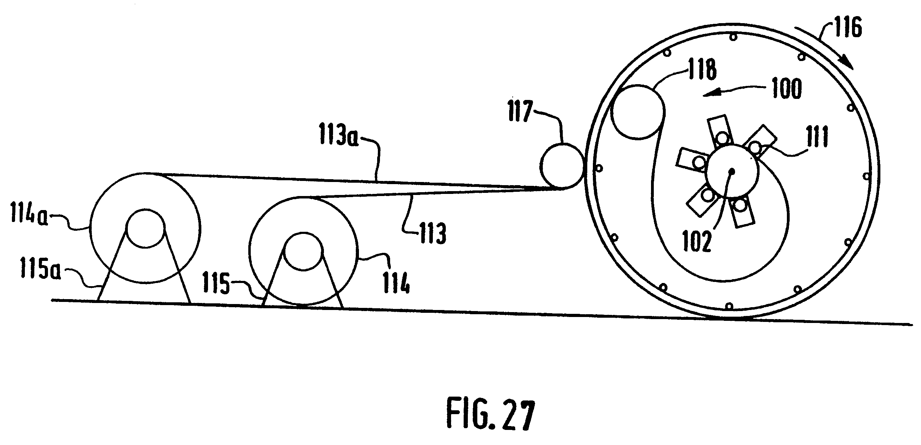

Dans un deuxième mode de réalisation, la bande profilée est enroulée sur une bobine d'émission stationnaire qui peut tourner autour d'un axe porté par un bâti fixe, et non pas d'un axe porté par le plateau 100 ou par un support tournant. Dans une variante avantageuse, on peut utiliser un dispositif de spiralage tel que décrit dans le brevet US 4.895.011. Un exemple d'un tel dispositif est illustré par la figure 27 qui correspond au cas d'une carcasse 1 réalisée à partir de deux bandes profilées 113 et 113a. Les bandes profilées 113 et 113a sont enroulées sur deux bobines d'émission stationnaires 114 et 114a, disposées l'une derrière l'autre sur des bâtis fixes 115 et 115a qui sont installés dans le même plan vertical que le plateau 100 de la spiraleuse, de sorte que les bandes profilées 113 et 113a se trouvent intégralement contenues entre deux plans verticaux contenant approximativement les rouleaux presseurs 111 disposés autour de l'axe 102 de la spiraleuse, et que les parties de la bande profilée qui doivent devenir les portées cylindriques de la carcasse 1 une fois le tube formé par spiralage restent perpendiculaires aux dits plans verticaux. Le plateau 100 tournant dans le sens de la flèche 116, les bandes profilées prennent appui autour d'une poulie de guidage 117 de façon à pouvoir être enroulées en une multiplicité de spires concentriques à la périphérie du plateau 100. Les bandes profilées 113 et 113a sont alors extraites par l'intérieur de l'empilement des spires de stockage périphériques par une poulie de renvoi 118, de façon à pouvoir être acheminées vers le centre du plateau 100 où elles sont mises en forme par les rouleaux de cintrage 111 qui leur impriment un rayon de courbure égal au rayon de la carcasse 1 à réaliser, et assurent l'emboîtement des spires successives. Il est important de noter qu'un premier emboîtement des deux bandes profilées 113 et 113a est réalisé dans la zone où elles s'enroulent autour de la poulie de guidage 117, les deux bandes 113 et 113a restent emboîtées l'une dans l'autre sur toute la longueur de leur trajet sur le plateau 100 jusqu'au spiralage final réalisé par les rouleaux de cintrage 111. Dans ces conditions, l'emboîtement définitif des spires adjacentes qui est réalisé par les rouleaux 111 en même temps que le cintrage de façon à former la carcasse 1 avec agrafage axial consiste à raccorder les unes aux autres les spires doubles formées par l'assemblage des deux bandes 113 et 113a. Ainsi qu'il a été expliqué ci-dessus, on peut ainsi réaliser la carcasse 1, par exemple, aussi bien avec deux bandes profilées de profils complémentaires, par exemple "en lunettes", qu'avec deux bandes en S de même section constituant une nappe de spires emboîtées unique. Il est évident que, par simplification du dispositif décrit ci-dessus, on peut facilement réaliser la carcasse 1 à partir d'une bande profilée unique, en particulier en S.

Dans un mode de réalisation différent du dispositif de fabrication de la carcasse 1, il est également possible de réaliser le spiralage avec emboîtements des spires successives de bande profilée en disposant au moins un rouleau de cintrage à l'intérieur de la surface cylindrique que définissent les spires successives une fois que la bande profilée est incurvée au rayon désiré par l'action des rouleaux de cintrage. Dans ce cas, la bande spiralée passe ainsi entre une rangée de rouleaux extérieurs dessinant approximativement un arc de cercle et au moins un rouleau intérieur, la carcasse 1 ainsi formée sortant librement sans être positionnée autour d'un mandrin intérieur centré sur l'axe 102.

D'une façon générale, il a été trouvé que, outre sa relative facilité de mise en oeuvre, la carcasse 1 selon l'invention présente l'avantage que la section de la bande profilée est réalisée d'une façon complète et définitive une fois qu'elle a été effectuée par profilage d'un feuillard ou tout autre procédé, et ceci, que cette opération de mise en forme de la bande profilée soit réalisée en même temps que le spiralage sur le dispositif utilisé pour le spiralage de la carcasse 1, ou qu'elle ait été réalisée séparément, par une opération préalable. Il en résulte que le spiralage et l'emboîtement des spires de carcasse 1 sont réalisés par les rouleaux de cintrage 111 sans aucune modification de la forme des bandes profilées, en particulier, sans déformation plastique de la section, ce qui constitue un avantage appréciable par comparaison avec la fabrication des carcasses connues, en particulier des carcasses en S actuellement utilisées pour réaliser les conduites tubulaires flexibles de haute résistance destinées, en particulier, aux installations de production pétrolière sous marines.

Il peut être avantageux de remplir les caissons 7 avec des agents inhibiteurs de corrosion ou, par exemple, avec de l'huile. D'autres moyens de remplissage comme par exemple des mousses ou des éléments solides participant à la rigidification de la carcasse 1 ne sortent pas du cadre de la présente invention.

Les conduites tubulaires flexibles selon la présente invention s'appliquent notamment au transport de fluides, comme par exemple de l'eau ou des hydrocarbures.

La carcasse selon l'invention peut aussi être mise en oeuvre pour la protection extérieure des corps allongés tels que les câbles notamment électriques.

**Revendications**

1. Carcasse tubulaire flexible constituée d'au moins une bande profilée enroulée hélicoïdalement avec emboîtement des spires successives, ladite carcasse comportant au moins un caisson spiralé en hélice autour de l'axe de la carcasse, caractérisée par le fait que le ou chaque caisson (7) est défini par des parois d'une même spire d'une bande profilée.

2. Carcasse selon la revendication 1, caractérisée par le fait que le ou lesdits caissons (7) ont une section sensiblement rectangulaire.

3. Carcasse selon la revendication 1 ou 2, caractérisée par le fait qu'elle est composée de deux nappes (11,12) respectivement complémentaires, chaque nappe comportant au moins une bande profilée.

4. Carcasse selon la revendication 3, caractérisée par le fait que chaque nappe (11,12) comporte au moins un caisson (7).

5. Carcasse selon la revendication 3, caractérisée par le fait qu'elle comporte une nappe (12) comportant au moins un caisson (7) et une nappe (11') ne comportant pas de caisson.

6. Carcasse selon la revendication 1 ou 2, caractérisée par le fait qu'elle comporte au moins une bande (24) en forme de S.

7. Carcasse selon l'une quelconque des revendications précédentes, caractérisée par le fait qu'elle comporte au moins une bande comportant à au moins une de ses extrémités, un bord (9) sensiblement radial par rapport à la carcasse.

8. Carcasse selon la revendication 7, caractérisée par le fait que le bord (9) sensiblement radial, prend appui sur la portée principale (12) d'une bande formant la carcasse.

9. Carcasse selon l'une quelconque des revendications 1 à 7, caractérisée par le fait qu'elle comporte au moins une bande comprenant un caisson (7) à chacune des deux extrémités de ladite bande.

10. Carcasse selon l'une quelconque des revendications précédentes, caractérisée par le fait qu'elle comporte des moyens (13, 16), pour empêcher le déplacement des extrémités de bandes formant le caisson.

11. Carcasse selon la revendication 10, caractérisée par le fait qu'elle comporte des éléments de soudure (16,16') fermant, au moins localement, le caisson (7).

12. Conduite tubulaire flexible caractérisée par le fait qu'elle comporte au moins une carcasse (1) selon l'une quelconque des revendications précédentes.

13. Conduite tubulaire flexible selon la revendication 12, caractérisée par le fait qu'elle comporte une carcasse (1), selon l'une quelconque des revendications 1 à 11 placée à l'intérieur d'une gaine d'étanchéité interne (3), ladite carcasse empêchant l'écrasement de la conduite tubulaire flexible.

14. Conduite tubulaire flexible selon les revendications 12 ou 13, caractérisée par le fait qu'elle comporte une carcasse selon l'une quelconque des revendications 1 à 11, disposée à l'extérieur de la gaine ou du tube d'étanchéité interne (3), constituant une couche d'armure pour résister à la pression interne.

15. Conduite tubulaire flexible selon l'une quelconque des revendications 12 à 14, caractérisée par le fait qu'elle comporte une carcasse (1) selon l'une quelconque des revendications 1 à 11, constituant une carapace extérieure de protection de la conduite tubulaire flexible.

**Patentansprüche**

1. Rohrförmige, flexible Karkasse aus mindestens einem Profilband, das schraubenförmig so gewickelt ist, daß aufeinanderfolgende Windungen ineinander greifen, welche Karkasse mindestens eine Kammer aufweist, die schraubenförmig um die Karkassenachse gewunden ist, **dadurch gekennzeichnet,** daß die Kammer (7) oder jede Kammer durch die Wände ein und derselben Windung eines Profilbandes umgrenzt ist.

2. Karkasse nach Anspruch 1, **dadurch gekennzeichnet,** daß die Kammer (7) oder die Kammern im wesentlichen rechteckigen Querschnitt aufweisen.

3. Karkasse nach Anspruch 1 oder Anspruch 2, **dadurch gekennzeichnet,** daß sie aus zwei zueinander komplementären Lamellen (11, 12) besteht, von denen jede mindestens ein Profilband aufweist.

4. Karkasse nach Anspruch 3, **dadurch gekennzeichnet,** daß jede Lamelle (11, 12) mindestens eine Kammer (7) aufweist.

5. Karkasse nach Anspruch 3, **dadurch gekennzeichnet,** daß sie eine Lamelle (12) mit mindestens einer Kammer (7) und eine Lamelle (11') ohne Kammer aufweist.

6. Karkasse nach Anspruch 1 oder Anspruch 2, **dadurch gekennzeichnet,** daß sie mindestens ein S-förmiges Band (24) aufweist.

7. Karkasse nach einem der vorstehenden Ansprüche, **dadurch gekennzeichnet,** daß sie mindestens ein Band aufweist, das an mindestens einem seiner Enden einen im wesentlichen radial zur Karkasse verlaufenden Rand (9) aufweist.

8. Karkasse nach Anspruch 7, **dadurch gekenn-**

zeichnet, daß sich der im wesentlichen radial verlaufende Rand (9) auf der Hauptstützfläche (12) eines die Karkasse bildenden Bandes abstützt.

9. Karkasse nach einem der Ansprüche 1 bis 7, **dadurch gekennzeichnet,** daß sie mindestens ein Band mit einer Kammer (7) an jedem der beiden Enden desselben aufweist.

10. Karkasse nach einem der vorstehenden Ansprüche, **dadurch gekennzeichnet,** daß sie Einrichtungen (13, 16) zum Verhindern einer Verschiebung der die Kammer bildenden Enden des Bandes aufweist.

11. Karkasse nach Anspruch 10, **dadurch gekennzeichnet,** daß sie Schweißstellen (16, 16') aufweist, die die Kammer (7) zumindest örtlich verschließen.

12. Flexible Rohrleitung, **dadurch gekennzeichnet,** daß sie mindestens eine Karkasse (1) nach einem der vorstehenden Ansprüche aufweist.

13. Flexible Rohrleitung nach Anspruch 12, **dadurch gekennzeichnet,** daß sie eine Karkasse (1) nach einem der Ansprüche 1 bis 11 aufweist, die an der Innenseite eines inneren Dichtmantels (3) angeordnet ist, wobei die Karkasse ein Eindrücken der flexiblen Rohrleitung verhindert.

14. Flexible Rohrleitung nach Anspruch 12 oder Anspruch 13, **dadurch gekennzeichnet,** daß sie eine Karkasse nach einem der Ansprüche 1 bis 11 aufweist, die an der Außenseite des inneren Dichtmantels oder -rohrs (3) angeordnet ist und eine Bewehrungsschicht bildet, um dem Innendruck standzuhalten.

15. Flexible Rohrleitung nach einem der Ansprüche 12 bis 14, **dadurch gekennzeichnet,** daß sie eine Karkasse (1) nach einem der Ansprüche 1 bis 11 aufweist, die eine Schutzumpanzerung der flexiblen Rohrleitung bildet.

**Claims**

1. Flexible tubular carcass consisting of at least one profiled band wound helically with interlocking of successive turns, the said carcass comprising at least one box element spiralled in a helix around the axis of the carcass, characterized in that the or each box element (7) is defined by walls of one and the same turn of a profiled band.

2. Carcass according to Claim 1, characterized in that the said box element or elements (7) have a substantially rectangular cross-section.

3. Carcass according to Claim 1 or 2, characterized in that it is composed of two layers (11, 12) which are respectively complementary, each layer comprising at least one profiled band.

4. Carcass according to Claim 3, characterized in that each layer (11, 12) includes at least one box element (7).

5. Carcass according to Claim 3, characterized in that it includes one layer (12) including at least one box element (7) and one layer (11') including no box element.

6. Carcass according to Claim 1 or 2, characterized in that it includes at least one S-shaped band (24).

7. Carcass according to any one of the preceding claims, characterized in that it includes at least one band, including, at at least one of its ends, an edge (9) which is substantially radial with respect to the carcass.

8. Carcass according to Claim 7, characterized in that the substantially radial edge (9) bears on the main bearing zone (12) of a band forming the carcass.

9. Carcass according to any one of Claims 1 to 7, characterized in that it includes at least one band comprising a box element (7) at each of the two ends of the said band.

10. Carcass according to any one of the preceding claims, characterized in that it includes means (13, 16) for preventing the displacement of the ends of bands forming the box element.

11. Carcass according to Claim 10, characterized in that it includes welding elements (16, 16') at least locally closing the box element (7).

12. Flexible tubular pipe, characterized in that it includes at least one carcass (1) according to any one of the preceding claims.

13. Flexible tubular pipe according to Claim 12, characterized in that it includes a carcass (1) according to any one of Claims 1 to 11, placed inside an inner sealing sheath (3), the said carcass preventing crushing of the flexible tubular pipe.

14. Flexible tubular pipe according to Claims 12 or 13, characterized in that it includes a carcass according to any one of Claims 1 to 11, arranged outside the inner sealing sheath or tube (3), constituting a reinforcing layer for resisting the internal pressure.

15. Flexible tubular pipe according to any one of Claims 12 to 14, characterized in that it includes a carcass (1) according to any one of Claims 1 to 11, constituting an outer shell for protecting the flexible tubular pipe.

FIG.1

FIG.2

FIG.4

FIG.3

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

FIG.20

EP 0 494 299 B1

**FIG.21**

16  11  16  21  7  7  7  21  7  16  16  12

**FIG.22**

-7-  7  7  -7-  -7-  7
a  b  c  d  e  f
6

7  7  7  7
g  j  k  l
6

7  7
h  i
6

FIG. 23

EP 0 494 299 B1

**FIG.24a**

P. moyen

J moyen

24

6

r

R

**FIG.24b**

P. mini

**FIG.24c**

P. maxi

b

h

d

e

e

J maxi

Rm

a

FIG.25

FIG. 26

FIG. 27